# EUROPÄISCHE PATENTANMELDUNG

(11) **EP 3 037 200 A1**
(43) Veröffentlichungstag der Anmeldung: **29.06.2016**
(21) Anmeldenummer: 14199723.9
(22) Anmeldetag: 22.12.2014
(51) Int. Cl.: B23D 61/04, B23D 65/00, B28D 1/04, B28D 1/12

(54) **Bohrring für eine Kernbohrkrone und Verfahren zur Herstellung eines Bohrringes**

(71) Anmelder: HILTI Aktiengesellschaft, 9494 Schaan (LI)
(72) Erfinder: Mueller, Matthias, 9470 Buchs (CH); Sonderegger, Marcel, 9435 Heerbrugg (CH)
(74) Vertreter: Hilti Aktiengesellschaft Corporate Intellectual Property

(57) **Zusammenfassung**

Verfahren zur Herstellung eines Bohrringes (21) für eine Kernbohrkrone, mit den Schritten:
▪ mindestens zwei Grünteile werden aus eingekapselten Diamantpartikeln aufgebaut, wobei Diamantpartikel von einem Pulvergemisch umhüllt sind,
▪ die Grünteile werden unter Druckeinwirkung zu Ringabschnitten (22.1, 22.2, 23.1, 23.2) umgeformt und
▪ die Ringabschnitte (22.1, 22.2, 23.1, 23.2) werden ringförmig zusammengesetzt und unter Temperatureinwirkung zu einem geschlossenen Bohrring (21) gesintert.

## Beschreibung

### Technisches Gebiet

Die vorliegende Erfindung betrifft einen Bohrring für eine Kernbohrkrone gemäß dem Oberbegriff des Anspruchs 1 sowie ein Verfahren zur Herstellung eines Bohrringes gemäß dem Oberbegriff des Anspruchs 9.

### Stand der Technik

Bei Diamantwerkzeugen, die als Kernbohrkronen ausgebildet sind, wird zwischen Kernbohrkronen mit einem geschlossenen Bohrring und segmentierten Kernbohrkronen mit einzelnen Schneidsegmenten unterschieden. Kernbohrkronen bestehen aus einem Bearbeitungsabschnitt, einem zylinderförmigen Bohrschaft und einem Aufnahmeabschnitt mit Einsteckende. Die Kernbohrkrone wird über das Einsteckende in der Werkzeugaufnahme eines Kernbohrgerätes befestigt und im Bohrbetrieb vom Kernbohrgerät um eine Drehachse angetrieben.

Geschlossene Bohrringe werden aus einem Pulvergemisch mit statistisch verteilten Diamantpartikeln hergestellt. Das Pulvergemisch wird in eine Werkzeugform gefüllt und zu einem Grünteil gepresst; das Grünteil wird unter Temperatur- und Druckeinwirkung zu einem geschlossenen Bohrring gesintert.

Bei der Herstellung von Schneidsegmenten für segmentierte Kernbohrkronen haben sich im Profibereich Verfahren etabliert, bei denen die Schneidsegmente als Grünteile aus eingekapselten Diamantpartikeln aufgebaut werden. Einzelne Diamantpartikel sind von einem Pulvergemisch umhüllt und bilden die eingekapselten Diamantpartikel. Die eingekapselten Diamantpartikel werden in eine Werkzeugform gefüllt und zu einem Grünteil gepresst; die Grünteile werden anschließend unter Temperatur- und Druckeinwirkung zu fertigen Schneidsegmenten gesintert.

### Darstellung der Erfindung

Die Aufgabe der vorliegenden Erfindung besteht darin, die Technologie der eingekapselten Diamantpartikel auf geschlossene Bohrringe anzuwenden und die Bearbeitungsqualität, die mit den so hergestellten Bohrringen erreichbar ist, gegenüber Bohrringen mit statistisch verteilten Diamantpartikeln zu erhöhen.

Diese Aufgabe wird bei dem eingangs genannten Bohrring für eine Kernbohrkrone erfindungsgemäß durch die Merkmale des unabhängigen Anspruchs 1 und bei dem eingangs genannten Verfahren zur Herstellung eines Bohrringes durch die Merkmale des unabhängigen Anspruchs 9 gelöst. Vorteilhafte Weiterbildungen sind in den abhängigen Ansprüchen angegeben.

Erfindungsgemäß ist beim Bohrring vorgesehen, dass die Ringabschnitte an den Seitenkanten miteinander verbunden sind. Der Bohrring ist aus mindestens zwei Ringabschnitten aufgebaut, die aus einem gesinterten Pulvergemisch und Diamantpartikeln bestehen. Dabei wird der Bohrring nicht als geschlossener Bohrring aufgebaut, sondern wird aus zwei oder mehr Ringabschnitten zusammengesetzt, die an den Seitenkanten miteinander verbunden sind.

In einer bevorzugten Variante umfasst der Bohrring eine Anzahl von n, n ≥ 1 ersten Ringabschnitten und n zweiten Ringabschnitten, wobei die ersten und zweiten Ringabschnitte entlang einer Umfangsrichtung des Bohrringes abwechselnd hintereinander angeordnet sind. Der Aufbau des Bohrringes aus ersten und zweiten Ringabschnitten ermöglicht die Anpassung an unterschiedliche zu bearbeitende Untergründe. Beim Kernbohren in Betonwerkstoffe mit eingebetteten Armierungseisen, die auch als armierte Betonwerkstoffe bezeichnet werden, trifft ein Bohrring beispielsweise auf unterschiedliche Untergründe in Form von Beton und Armierungseisen.

Besonders bevorzugt sind die ersten Ringabschnitte aus einem gesinterten ersten Pulvergemisch und ersten Diamantpartikeln aufgebaut und die zweiten Ringabschnitte sind aus einem gesinterten zweiten Pulvergemisch und zweiten Diamantpartikeln aufgebaut. Die Eigenschaften der ersten Ringabschnitte können an einen ersten Untergrund, beispielsweise Beton, und die Eigenschaften der zweiten Ringabschnitte an einen zweiten Untergrund, beispielsweise Armierungseisen, angepasst werden. Die Eigenschaften der Ringabschnitte lassen sich über das Pulvergemisch und die Diamantpartikel einstellen. Bei den Diamantpartikeln können der mittlere Diamantdurchmesser, die Diamantverteilung und die Anzahl an Diamantpartikeln verändert werden.

Besonders bevorzugt stimmen das erste Pulvergemisch der ersten Ringabschnitte und das zweite Pulvergemisch der zweiten Ringabschnitte überein. Besonders bevorzugt weisen die ersten Diamantpartikel der ersten Ringabschnitte und die zweiten Diamantpartikel der zweiten Ringabschnitte die gleiche Diamantverteilung und den gleichen mittleren Diamantdurchmesser auf. Durch die Verwendung des gleichen Pulvergemisches und der gleichen Diamantpartikel für die ersten und zweiten Ringabschnitte kann der apparative Aufwand bei der Herstellung des Bohrringes reduziert werden; es werden nur ein Pulvergemisch und eine Sorte an Diamantpartikeln benötigt.

In einer bevorzugten Ausführung ist zwischen den Ringabschnitten mindestens ein Wasserschlitz vorgesehen. Während der Bearbeitung mit dem Bohrring muss Kühlflüssigkeit an die Bearbeitungsstelle transportiert werden; die Kühlflüssigkeit strömt über die Wasserschlitze an die Bearbeitungsstelle und sorgt für eine ausreichende Kühlung des Bohrringes.

Besonders bevorzugt erstreckt sich der mindestens eine Wasserschlitz über eine Höhe zwischen 1/3 und 5/6 der Gesamthöhe des Bohrringes. Bei Bohrringen, die mit dem Bohrschaft verschweißt werden, wird der Anbindungsbereich ohne Diamanten aufgebaut und ist für die Bearbeitung ungeeignet. Für die Bearbeitung von Untergründen eignet sich die mit Diamantpartikeln versehene Matrixzone, die ca. 5/6 der Gesamthöhe des Bohrringes darstellt.

Besonders bevorzugt wird die Höhe des mindestens einen Wasserschlitzes auf 2/3 der Gesamthöhe des Bohrringes eingestellt. Bei einem Anteil von 2/3 der Gesamthöhe kann eine ausreichende Festigkeit des fertigen Bohrringes sichergestellt werden. Während der Bearbeitung mit dem Bohrring muss Kühlflüssigkeit an die Bearbeitungsstelle transportiert werden; daher werden die Wasserschlitze im Bohrring so lang wie möglich ausgebildet.

Besonders bevorzugt weisen die Ringabschnitte eine oder mehrere Bohrungen auf, die die Innenseite und Außenseite des Bohrringes verbinden. Dabei ist die Bohrung besonders bevorzugt zumindest teilweise unterhalb des mindestens einen Wasserschlitzes angeordnet. Die zusätzliche Bohrung stellt eine ausreichende Kühlung des Bohrringes sicher, wenn der mindestens eine Wasserschlitz abgetragen ist.

Das erfindungsgemäße Verfahren zur Herstellung eines geschlossenen Bohrringes umfasst die Schritte:
▪ mindestens zwei Grünteile werden aus eingekapselten Diamantpartikeln aufgebaut, wobei Diamantpartikel von einem Pulvergemisch umhüllt sind,
▪ die Grünteile werden unter Druckeinwirkung zu Ringabschnitten umgeformt und
▪ die Ringabschnitte werden ringförmig zusammengesetzt und unter Temperatureinwirkung zu einem geschlossenen Bohrring gesintert.

Das erfindungsgemäße Verfahren umfasst drei Verfahrensabschnitte, die unterschiedliche Technologien nutzen. Der Bohrring wird beim erfindungsgemäßen Verfahren nicht als geschlossener Bohrring aufgebaut, sondern wird aus zwei oder mehr Ringabschnitten zusammengesetzt, die durch Sintern verbunden werden.

Im ersten Verfahrensabschnitt werden mehrere Grünteile aus eingekapselten Diamantpartikeln aufgebaut, wobei Diamantpartikel von einem Pulvergemisch umhüllt sind und die eingekapselten Diamantpartikel bilden. Unter dem Begriff "Pulvergemisch" werden feinkörnige Pulvermischungen und granulierte Pulvermischungen zusammengefasst. Als Pulvergemisch können Eisen-, Kobalt- und/oder Bronzepulver verwendet werden; durch Zumischen von Zusätzen, wie beispielsweise Wolframkarbid, können die Eigenschaften der Bohrringe (Verschleißwiderstand, Lebensdauer, Schnittfreudigkeit) beeinflusst werden. Außerdem hat die Zusammensetzung des Pulvergemisches Einfluss auf die Sintertemperatur. Unter dem Begriff "Diamantpartikel" werden einzelne Diamantpartikel und beschichtete Diamantpartikel zusammengefasst.

Die Grünteile weisen die geometrische Form eines geraden Prismas mit einer mehreckigen Grundfläche auf. Die prismenförmigen Grünteile werden im zweiten Verfahrensabschnitt unter Druckeinwirkung zu Ringabschnitten umgeformt. Das Umformen der Grünteile findet bei Temperaturen statt, die unterhalb der Schmelztemperatur des Pulvergemisches liegen. Im dritten Verfahrensabschnitt werden die Ringabschnitte ringförmig zusammengesetzt und unter Temperatureinwirkung zu einem geschlossenen Bohrring gesintert. Beim Sintern der Ringabschnitte erfolgen zum einen eine Verdichtung der einzelnen Ringabschnitte und zum anderen eine Verbindung zwischen benachbarten Ringabschnitten.

Als Umformverfahren eignen sich Kaltpressen, Warmpressen sowie vergleichbare Verfahren. Beim Kaltpressen wird ein Grünteil unter einem hohen Druck in die vorgegebene Form gebracht. In einer Kaltpresse erwärmt der Werkstoff sich zwar, allerdings findet die Umformung in einem Temperaturbereich statt, in dem keine Rekristallisation auftritt; der Werkstoff verformt sich, ohne dass die Festigkeit deutlich abnimmt. Beim Warmpressen, das auch als Gesenkschmieden bezeichnet wird, wird ein Grünteil unter einem hohen Druck und dem Zusatz von Wärme in seine endgültige Form gebracht. Zusätzlich zur Form verändert das Schmiedestück seine Materialstruktur; es wird fester und erhält dadurch ein dichteres Gefüge und eine homogene Oberfläche.

Sintern ist ein Verfahren zur Herstellung von Werkstoffen, bei dem ein Pulver oder ein Grünteil (gepresstes Pulver) auf Temperaturen unterhalb der Schmelztemperatur erhitzt werden, um die Festigkeit durch Verbinden der einzelnen Pulverpartikel zu erhöhen. Der Sintervorgang läuft in drei Stadien ab, in denen sich die Porosität und das Volumen des Grünteils deutlich verringern. Im ersten Stadium des Sinterns erfolgt lediglich eine Verdichtung des Grünteils, wohingegen sich im zweiten Stadium die offene Porosität deutlich verringert. Die Festigkeit der Sinterkörper beruht auf den, im dritten Stadium gebildeten Sinterverbindungen (Anschmelzungen zwischen den Pulverpartikeln), die durch Oberflächendiffusion zwischen den Pulverpartikeln entstehen. Heißpressen ist ein spezielles Sinterverfahren, bei dem neben Temperatur auch äußerer Druck aufgewendet wird.

In einer bevorzugten Variante wird der Bohrring aus einer Anzahl von n, n ≥ 1 ersten Grünteilen, die zu ersten Ringabschnitten umgeformt werden, und n zweiten Grünteilen, die zu zweiten Ringabschnitten umgeformt werden, aufgebaut, wobei die ersten und zweiten Ringabschnitte entlang einer Umfangsrichtung des Bohrringes abwechselnd hintereinander angeordnet werden. Die Herstellung des Bohrringes aus ersten und zweiten Grünteilen ermöglicht die Anpassung des Bohrringes an unterschiedliche zu bearbeitende Untergründe, beispielsweise an Beton und Armierungseisen in armierten Betonwerkstoffen.

Besonders bevorzugt werden die ersten Grünteile aus eingekapselten ersten Diamantpartikeln, die ein erstes Pulvergemisch und erste Diamantpartikel enthalten, hergestellt und die zweiten Grünteile werden aus eingekapselten zweiten Diamantpartikeln, die ein zweites Pulvergemisch und zweite Diamantpartikel enthalten, hergestellt. Die Anpassung des Bohrringes an den zu bearbeitenden Untergrund kann über die Auswahl des Pulvergemisches und die Auswahl der Diamantpartikel erfolgen. Beim Pulvergemisch kann die Zusammensetzung der Werkstoffe variiert werden; bei den Diamantpartikeln können der mittlere Diamantdurchmesser, die Diamantverteilung und die Anzahl der Diamantpartikel variiert werden.

In einer alternativen Variante wird der Bohrring aus einer Anzahl von n ≥ 2 gleichen Grünteilen aufgebaut, wobei die Grünteile zu Ringabschnitten umgeformt und entlang einer Umfangsrichtung des Bohrringes hintereinander angeordnet werden. Durch die Verwendung von gleichen Grünteilen kann der apparative Aufwand beim Aufbau der Grünteile reduziert werden; es werden nur ein Pulvergemisch und eine Sorte an Diamantpartikeln benötigt.

Die Grünteile weisen die geometrische Form eines geraden Prismas mit einer mehreckigen Grundfläche auf. Als mehreckige Grundflächen eignen sich rechteckige Grundflächen, fünfeckige Grundflächen und sechseckige Grundflächen.

In einer ersten Variante werden die Grünteile mit rechteckigen Grundflächen aufgebaut. Die rechteckige Grundfläche stellt die einfachste Geometrie dar, um Bohrringe aus mehreren Ringabschnitten herzustellen. Die Ringabschnitte werden an den Seitenkanten mit den benachbarten Ringabschnitten verbunden.

In einer zweiten Variante werden die Grünteile mit fünfeckigen Grundflächen aufgebaut, wobei die Grundflächen ein Rechteck und ein Trapez mit zwei rechten Innenwinkeln aufweisen. Im Bereich des geneigten Trapezschenkels wird beim Sintern mit dem benachbarten Ringabschnitt ein Wasserschlitz erzeugt. Mit einer solchen fünfeckigen Grundfläche wird bei einem Bohrring mit 2n, n ≥ 1 Ringabschnitten eine Anzahl von n Wasserschlitzen erzeugt.

In einer dritten Variante werden die Grünteile mit sechseckigen Grundflächen aufgebaut, wobei die Grundflächen ein Rechteck und ein gleichschenkliges Trapez aufweisen. Im Bereich der geneigten Trapezschenkel werden beim Sintern mit den benachbarten Ringabschnitten Wasserschlitze erzeugt. Mit einer solchen sechseckigen Grundfläche wird bei einem Bohrring mit n, n ≥ 2 Ringabschnitten eine Anzahl von n Wasserschlitzen erzeugt.

In einer bevorzugten Weiterentwicklung werden die Ringabschnitte beim Sintern einer Temperatur- und Druckeinwirkung unterzogen. Bei Sinterverfahren mit Temperatur- und Druckeinwirkung, wie dem Heißpressen, läuft das Sintern schneller und bei niedrigerer Temperatur ab als bei Sinterverfahren ohne Druckeinwirkung, wie dem freien Sintern. Da thermische Diamantschädigungen bereits bei 600 °C auftreten, kann eine niedrigere Sintertemperatur ein qualitativer Vorteil sein.

Besonders bevorzugt werden die Ringabschnitte durch die Druckeinwirkung beim Sintern einer zusätzlichen äußeren Formgebung unterzogen. Für die Bearbeitung verschiedener Untergründe haben sich spezielle Dachformen als geeignet erwiesen. Diese Dachformen können durch Druckeinwirkung beim Sintern erzeugt werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Kernbohrkrone bestehend aus einem Bohrring, einem zylinderförmigen Bohrschaft und einem Aufnahmeabschnitt;
- FIG. 2: einen erfindungsgemäßen Bohrring mit vier Ringabschnitten und vier Wasserschlitzen zwischen den Ringabschnitten;
- FIGN. 3A-D: die Herstellung des Bohrringes der FIG. 2 aus ersten und zweiten Grünteilen mit einer sechseckigen Grundfläche (FIG. 3A), wobei die Grünteile zu ersten und zweiten Ringabschnitten umgeformt werden (FIG. 3B), die Ringabschnitte abwechselnd hintereinander angeordnet werden (FIG. 3C) und zu einem geschlossenen Bohrring gesintert werden (FIG. 3D); und
- FIGN. 4A-C: Grünteile mit einer rechteckigen Grundfläche (FIG. 4A), einer fünfeckigen Grundfläche (FIG. 4B) und einer sechseckigen Grundfläche (FIG. 4C).

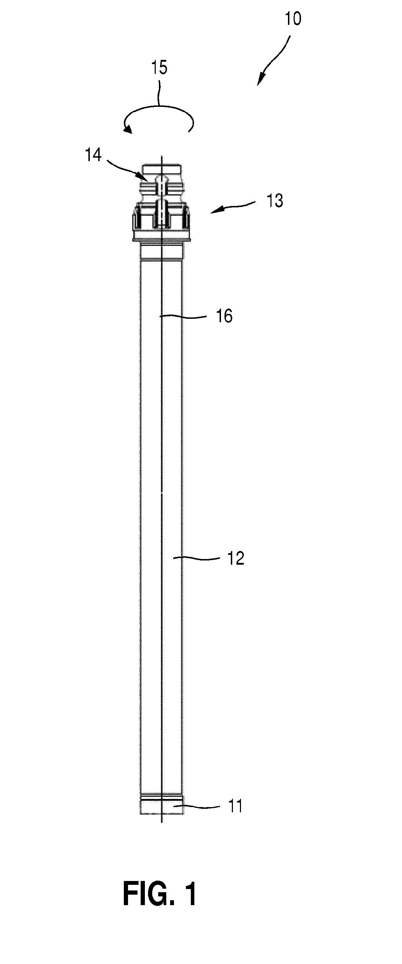

**FIG. 1** zeigt eine Kernbohrkrone **10** mit einem Bohrring **11,** einem zylinderförmigen Bohrschaft **12** und einem Aufnahmeabschnitt **13** mit Einsteckende **14.** Die Kernbohrkrone 10 wird über das Einsteckende 14 in der Werkzeugaufnahme eines Kernbohrgerätes befestigt und im Bohrbetrieb vom Kernbohrgerät in einer Drehrichtung **15** um eine Drehachse **16** angetrieben, wobei die Drehachse 16 koaxial zur Zylinderachse der Kernbohrkrone 10 verläuft.

Der Bohrring 11 ist mit dem Bohrschaft 12 verschweißt, verlötet, verschraubt oder in einer anderen geeigneten Befestigungsart am Bohrschaft 12 befestigt. Um den Bohrring 11 mit dem Bohrschaft 12 verschweißen zu können, muss der Verbindungsbereich zwischen Bohrring 11 und Bohrschaft 12 aus einem schweißbaren Material aufgebaut sein und darf keine Diamanten enthalten, da Diamanten nicht schweißbar sind.

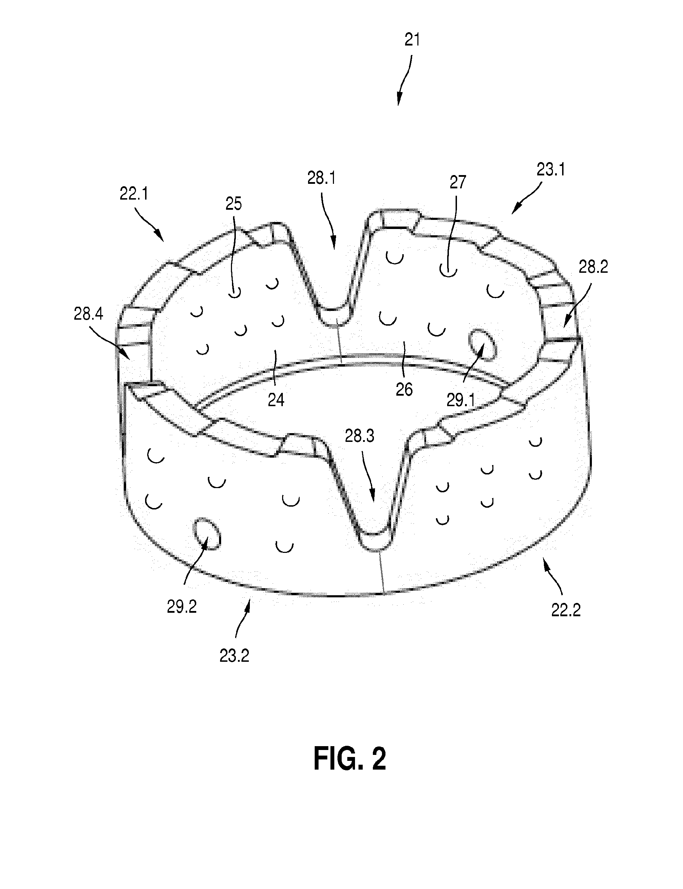

**FIG. 2** zeigt eine erste Ausführungsform eines erfindungsgemäßen Bohrringes **21,** der aus vier Ringabschnitten zusammengesetzt wurde. Die Ringabschnitte lassen sich in zwei erste Ringabschnitte **22.1, 22.2** und zwei zweite Ringabschnitte **23.1, 23.2** unterteilen, die entlang einer Umfangsrichtung des Bohrringes 21 abwechselnd hintereinander angeordnet sind. Die ersten Ringabschnitte 22.1, 22.2 bestehen aus einem ersten Pulvergemisch **24** und ersten Diamantpartikeln **25** und die zweiten Ringabschnitte 23.1, 23.2 bestehen aus einem zweiten Pulvergemisch **26** und zweiten Diamantpartikeln **27.**

Zwischen den Ringabschnitten 22.1, 23.1, 22.2, 23.2 sind vier Wasserschlitze **28.1, 28.2, 28.3, 28.4** ausgebildet, über die eine Kühlflüssigkeit an die Bearbeitungsstelle transportiert wird. Die Wasserschlitze 28.1-28.4 erstrecken sich über eine Höhe von ca. 2/3 der Gesamthöhe des Bohrringes 21. Um die Funktionsfähigkeit des Bohrringes 21 auch dann sicherzustellen, wenn die Wasserschlitze 28.1-28.4 abgetragen sind, weist der Bohrring 21 zusätzlich zwei Bohrungen **29.1, 29.2** auf, über die Kühlflüssigkeit an die Bearbeitungsstelle transportiert wird.

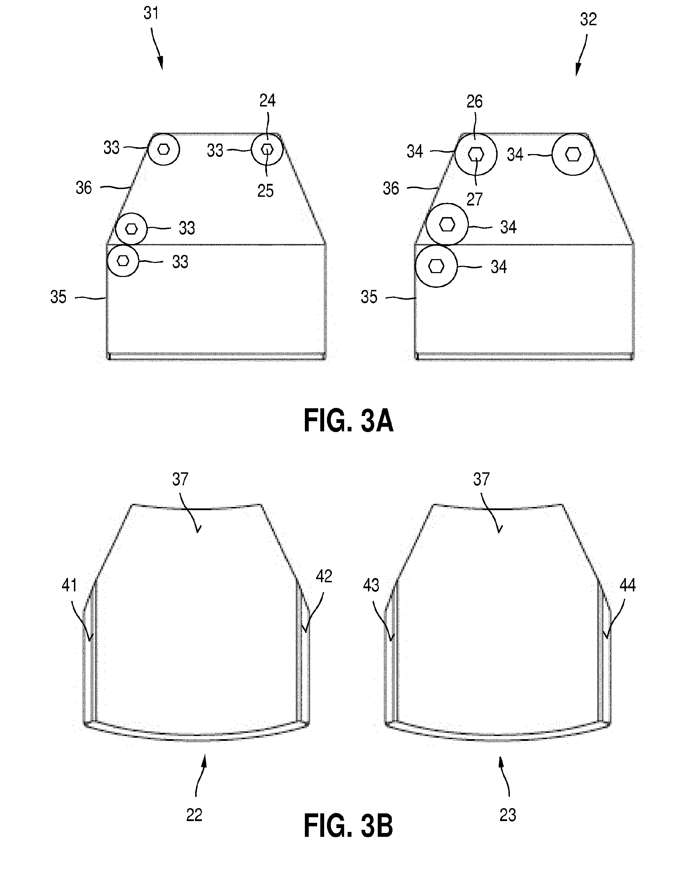

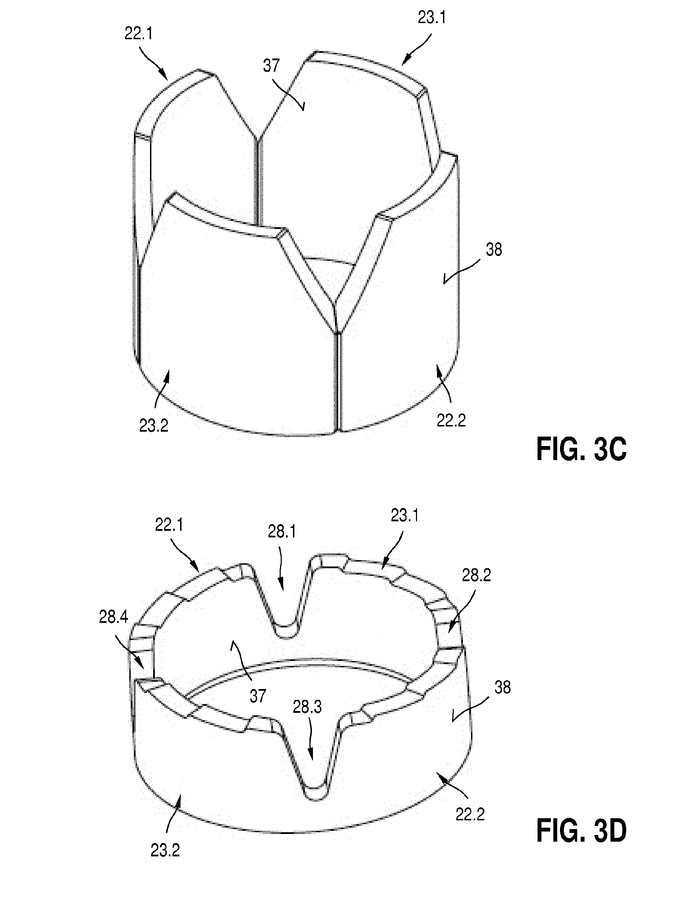

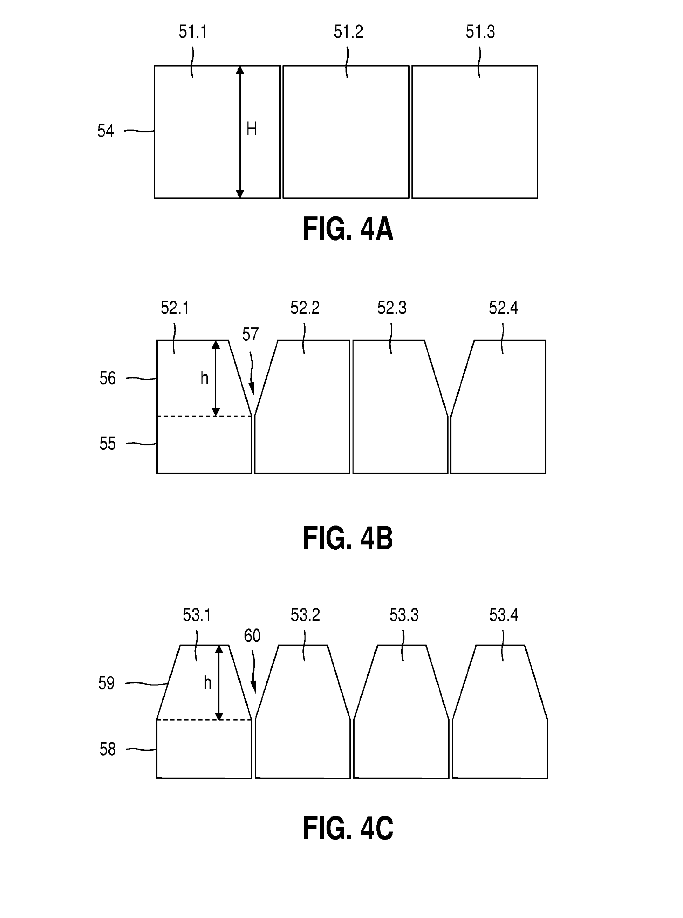

**FIGN. 3A-D** zeigen die Herstellung des Bohrringes 21 der FIG. 2 aus zwei ersten Grünteilen **31** und zwei zweiten Grünteilen **32** (FIG. 3A), die zu den ersten Ringabschnitten 22.1, 22.2 und zweiten Ringabschnitten 23.1, 23.2 umgeformt werden (FIG. 3B). Die Ringabschnitte werden entlang der Umfangsrichtung des Bohrringes 21 abwechselnd hintereinander angeordnet (FIG. 3C) und unter Temperatur- und Druckeinwirkung zu einem geschlossenen Bohrring gesintert (FIG. 4D).

FIG. 3A zeigt das erste Grünteil 31, das aus dem ersten Pulvergemisch 24 und den ersten Diamantpartikeln 25 aufgebaut ist, und das zweite Grünteil 32, das aus dem zweiten Pulvergemisch 26 und den zweiten Diamantpartikeln 27 aufgebaut ist. Die ersten Diamantpartikel 25 sind vom ersten Pulvergemisch 24 umhüllt und bilden erste eingekapselte Diamantpartikel **33** und die zweiten Diamantpartikel 27 sind vom zweiten Pulvergemisch 26 umhüllt und bilden zweite eingekapselte Diamantpartikel **34.** Die Grundfläche der Grünteile 31, 32 ist sechseckig ausgebildet und besteht aus einem Rechteck **35** und einem angrenzenden gleichschenkligen Trapez **36.** Im Bereich der Trapezschenkel werden beim Sintern durch zusätzliche Druckeinwirkung die Wasserschlitze 28.1-28.4 ausgebildet, über die Kühlflüssigkeit an die Bearbeitungsstelle transportiert wird.

FIG. 3B zeigt den ersten Ringabschnitt 22, der aus dem ersten Grünteil 31 der FIG. 3A unter Druckeinwirkung erzeugt wurde, und den zweiten Ringabschnitt 23, der aus dem zweiten Grünteil 32 der FIG. 3A unter Druckeinwirkung erzeugt wurde. Die Innenseiten **37** der Ringabschnitte 22, 23 weisen eine konkave Krümmung auf, die gegenüber liegenden Außenseiten **38** eine konvexe Krümmung.

Der erste Ringabschnitt 22 weist eine erste und zweite Seitenkante **41, 42** auf, die beim Sintern mit einer ersten und zweiten Seitenkante **43, 44** des zweiten Ringabschnittes 23 verbunden werden. Dabei werden die erste Seitenkante 41 des ersten Ringabschnittes 22 mit der zweiten Seitenkante 44 des zweiten Ringabschnittes 23 und die zweite Seitenkante 42 des ersten Ringabschnittes 22 mit der ersten Seitenkante 43 des zweiten Ringabschnittes 23 verbunden. Beim Bohrring 21 mit zwei ersten und zweiten Ringabschnitten 22.1, 22.2, 23.1, 23.2 werden jeweils die ersten und zweiten Seitenkanten der benachbarten Ringabschnitte miteinander verbunden.

FIG. 3C zeigt die ersten und zweiten Ringabschnitte 22.1, 22.2, 23.1, 23.2, die entlang der Umfangsrichtung des Bohrringes 21 hintereinander angeordnet sind und mit den Seitenkanten 41, 42, 43, 44 aneinander angrenzen. Die Ringabschnitte 22.1, 23.1, 22.2, 23.2 bilden einen geschlossenen Bohrring und werden in der in FIG. 3C gezeigten Anordnung in einer Heißpresse weiter bearbeitet.

FIG. 3D zeigt den Bohrring nach dem Heißpressen. Beim Heißpressen werden die Ringabschnitte 22.1, 23.1, 22.2, 23.2 einer Temperatur- und Druckeinwirkung unterzogen. Die Temperatureinwirkung sorgt dafür, dass das Pulvergemisch 24, 26 in den Ringabschnitten gesintert wird und die Ringabschnitte 22.1, 23.1, 22.2, 23.2 an den Seitenkanten 41, 42, 43, 44 miteinander verbunden werden. Durch Druckeinwirkung in axialer Richtung erfolgt eine Kompression der Ringabschnitte, die zu einer Verdichtung der Ringabschnitte führt. Das Heißpressen erfolgt in einer Matrize, die die endgültige Form des Bohrringes 21 festlegt.

Ein Bohrring wird beim erfindungsgemäßen Verfahren aus mehreren Grünteilen aufgebaut, die zu Ringabschnitten umgeformt werden und zu einem geschlossenen Bohrring gesintert werden; als Geometrie für die Grünteile eignen sich mehreckige Grundflächen. **FIGN. 4A-C** zeigen Grünteile **51** mit einer rechteckigen Grundfläche (FIG. 5A), Grünteile **52** mit einer fünfeckigen Grundfläche (FIG. 5B) und Grünteile **53** mit einer sechseckigen Grundfläche (FIG. 5C).

Die rechteckige Grundfläche **54** der Grünteile 51 stellt die einfachste Geometrie dar, um Bohrringe aus mehreren Ringabschnitten herzustellen. Im Ausführungsbeispiel der FIG. 5A werden drei gleiche Grünteile 51.1, 51.2, 51.3 verwendet, um einen geschlossenen Bohrring herzustellen.

Die fünfeckige Grundfläche der Grünteile 52 lässt sich in ein Rechteck **55** und ein Trapez **56** mit zwei rechten Innenwinkeln unterteilen. Im Bereich des geneigten Trapezschenkels wird beim Sintern mit dem benachbarten Ringabschnitt ein Wasserschlitz **57** erzeugt. Mit einer solchen fünfeckigen Grundfläche wird bei einem Bohrring mit 2n, n ≥ 1 Ringabschnitten eine Anzahl von n Wasserschlitzen 57 erzeugt.

Die sechseckige Grundfläche der Grünteile 53 lässt sich in ein Rechteck **58** und ein gleichschenkliges Trapez **59** unterteilen. Im Bereich der geneigten Trapezschenkel werden beim Sintern mit den benachbarten Ringabschnitten Wasserschlitze **60** erzeugt. Mit einer solchen sechseckigen Grundfläche wird bei einem Bohrring mit n, n ≥ 2 Ringabschnitten eine Anzahl von n Wasserschlitzen 60 erzeugt.

## Patentansprüche

1. Bohrring (21) für eine Kernbohrkrone (10), mit mindestens zwei Ringabschnitten (22.1, 22.2, 23.1, 23.2), die aus einem gesinterten Pulvergemisch (24, 26) und Diamantpartikeln (25, 27) aufgebaut sind, **dadurch gekennzeichnet, dass** die Ringabschnitte (22.1, 22.2, 23.1, 23.2) an den Seitenkanten (41, 42, 43, 44) miteinander verbunden sind.

2. Bohrring nach Anspruch 1, **dadurch gekennzeichnet, dass** der Bohrring (21) eine Anzahl von n, n ≥ 1 ersten Ringabschnitten (22.1, 22.2) und n zweiten Ringabschnitten (23.1, 23.2) umfasst, wobei die ersten und zweiten Ringabschnitte (22.1, 22.2, 23.1, 23.2) entlang einer Umfangsrichtung des Bohrringes (21) abwechselnd hintereinander angeordnet sind.

3. Bohrring nach Anspruch 2, **dadurch gekennzeichnet, dass** die ersten Ringabschnitte (22.1, 22.2) aus einem gesinterten ersten Pulvergemisch (24) und ersten Diamantpartikeln (25) aufgebaut sind und die zweiten Ringabschnitte (23.1, 23.2) aus einem gesinterten zweiten Pulvergemisch (26) und zweiten Diamantpartikeln (27) aufgebaut sind.

4. Bohrring nach Anspruch 3, **dadurch gekennzeichnet, dass** das erste Pulvergemisch (24) der ersten Ringabschnitte (22.1, 22.2) und das zweite Pulvergemisch (26) der zweiten Ringabschnitte (23.1, 23.2) übereinstimmen.

5. Bohrring nach einem der Ansprüche 3 bis 4, **dadurch gekennzeichnet, dass** die ersten Diamantpartikel (25) der ersten Ringabschnitte (22.1, 22.2) und die zweiten Diamantpartikel (27) der zweiten Ringabschnitte (23.1, 23.2) die gleiche Diamantverteilung und den gleichen mittleren Diamantdurchmesser aufweisen.

6. Bohrring nach einem der Ansprüche 1 bis 5, **dadurch gekennzeichnet, dass** zwischen den Ringabschnitten (22.1, 22.1, 23.1, 23.2) mindestens ein Wasserschlitz (28.1, 28.2, 28.3, 28.4) vorgesehen ist.

7. Bohrring nach Anspruch 6, **dadurch gekennzeichnet, dass** sich der mindestens eine Wasserschlitz (28.1-28.4) über eine Höhe zwischen 1/3 und 5/6 der Gesamthöhe des Bohrringes (21) erstreckt.

8. Bohrring nach einem der Ansprüche 6 bis 7, **dadurch gekennzeichnet, dass** die Ringabschnitte (23.1, 23.2) eine oder mehrere Bohrungen (29.1, 29.2) aufweisen, die die Innenseite (37) und Außenseite (38) des Bohrringes (21) verbinden.

9. Verfahren zur Herstellung eines Bohrringes (21) für eine Kernbohrkrone (10), mit den Schritten:
▪ mindestens zwei Grünteile (31, 32) werden aus eingekapselten Diamantpartikeln (33, 34) aufgebaut, wobei Diamantpartikel (25, 27) von einem Pulvergemisch (24, 26) umhüllt sind,
▪ die Grünteile (31, 32) werden unter Druckeinwirkung zu Ringabschnitten (22.1, 22.2, 23.1, 23.2) umgeformt und
▪ die Ringabschnitte (22.1, 22.2, 23.1, 23.2) werden ringförmig zusammengesetzt und unter Temperatureinwirkung zu einem geschlossenen Bohrring gesintert.

10. Verfahren nach Anspruch 9, **dadurch gekennzeichnet, dass** der Bohrring (21) aus einer Anzahl von n, n ≥ 1 ersten Grünteilen (31), die zu ersten Ringabschnitten (22.1, 22.2) umgeformt werden, und n zweiten Grünteilen (32), die zu zweiten Ringabschnitten (23.1, 23.2) umgeformt werden, aufgebaut wird, wobei die ersten und zweiten Ringabschnitte (22.1, 22.2, 23.1, 23.2) entlang einer Umfangsrichtung des Bohrringes (21) abwechselnd hintereinander angeordnet werden.

11. Verfahren nach Anspruch 10, **dadurch gekennzeichnet, dass** die ersten Grünteile (31) aus eingekapselten ersten Diamantpartikeln (33), die ein erstes Pulvergemisch (24) und erste Diamantpartikel (25) enthalten, hergestellt werden und die zweiten Grünteile (32) aus eingekapselten zweiten Diamantpartikeln (34), die ein zweites Pulvergemisch (26) und zweite Diamantpartikel (27) enthalten, hergestellt werden.

12. Verfahren nach Anspruch 9, **dadurch gekennzeichnet, dass** der Bohrring aus einer Anzahl von n ≥ 2 gleichen Grünteilen (51, 52, 53) aufgebaut wird, wobei die Grünteile zu Ringabschnitten umgeformt und entlang einer Umfangsrichtung des Bohrringes hintereinander angeordnet werden.

13. Verfahren nach einem der Ansprüche 9 bis 12, **dadurch gekennzeichnet, dass** die Grünteile (51) mit rechteckigen Grundflächen (54) aufgebaut werden.

14. Verfahren nach einem der Ansprüche 9 bis 12, **dadurch gekennzeichnet, dass** die Grünteile (52) mit fünfeckigen Grundflächen aufgebaut werden, wobei die Grundflächen ein Rechteck (55) und ein Trapez (56) mit zwei rechten Innenwinkeln aufweisen.

15. Verfahren nach einem der Ansprüche 9 bis 12, **dadurch gekennzeichnet, dass** die Grünteile (53) mit sechseckigen Grundflächen aufgebaut werden, wobei die Grundflächen ein Rechteck (58) und ein gleichschenkliges Trapez (59) aufweisen.

16. Verfahren nach Anspruch 9, **dadurch gekennzeichnet, dass** die Ringabschnitte (22.1, 22.2, 23.1, 23.2) beim Sintern einer Temperatur- und Druckeinwirkung unterzogen werden.

17. Verfahren nach Anspruch 16, **dadurch gekennzeichnet, dass** die Ringabschnitte (22.1, 22.2, 23.1, 23.2) durch die Druckeinwirkung beim Sintern einer zusätzlichen äußeren Formgebung unterzogen werden.
